# FASCICULE DE BREVET EUROPEEN

(11) **EP 3 919 325 B1**
(45) Date de publication et mention de la délivrance du brevet: **31.01.2024**
(21) Numéro de dépôt: 21177548.1
(22) Date de dépôt: 03.06.2021
(51) Int. Cl.: B60Q 3/44, B60Q 3/51, B61D 29/00

(54) **PLATINE DE MONTAGE D'UNE SOURCE LUMINEUSE SUR UNE PAROI DE VÉHICULE ET VÉHICULE, NOTAMMENT FERROVIAIRE, COMPRENANT UNE TELLE PLATINE DE MONTAGE**
PLATTE FÜR DIE MONTAGE EINER LICHTQUELLE AN EINER FAHRZEUGWAND, UND FAHRZEUG, INSBESONDERE SCHIENENFAHRZEUG, DAS EINE SOLCHE MONTAGEPLATTE UMFASST
PLATE FOR MOUNTING A LIGHT SOURCE ON A WALL OF A VEHICLE AND VEHICLE, IN PARTICULAR A RAILWAY VEHICLE, COMPRISING SUCH A MOUNTING PLATE

(30) Priorité: 05.06.2020 FR 2005908
(43) Date de publication de la demande: 08.12.2021
(73) Titulaire: ALSTOM Holdings, 93400 Saint-Ouen-sur-Seine (FR)
(72) Inventeur: LANGLOIS, Francis, 59310 Faumont (FR)
(74) Mandataire: Lavoix

(56) Documents cités:
- EP-A1- 3 514 451
- EP-A1- 3 575 148
- DE-A1-102011 013 368
- KR-Y1- 200 405 534

## Description

La présente invention concerne une platine de montage d'une source lumineuse sur une paroi de véhicule et un véhicule, notamment ferroviaire, comprenant une telle platine de montage.

Le document EP-A-3 575 148 décrit, pour l'aménagement intérieur d'un véhicule ferroviaire, un élément d'éclairage comprenant un profilé formant un capot d'un module de porte-bagage et une barrette de DEL fixée au capot.

Dans le domaine du transport des passagers, notamment ferroviaire, il est connu de fournir un éclairage à l'intérieur d'un véhicule, notamment en fixant des sources lumineuses, telles que des spots, sur les parois d'un tel véhicule. Par soucis d'esthétisme, il est connu de ménager un orifice de passage d'un faisceau lumineux issu de la source lumineuse sur une paroi et de fixer cette source lumineuse sur la face de la paroi n'étant pas visible des passagers en regard de cet orifice, afin de ne rendre visible par les passagers que le faisceau lumineux issu de cette source lumineuse et passant par cet orifice.

Il est connu de KR200405534Y1 de monter un spot lumineux sur une paroi d'une voiture de train en plaquant une bague sur une face visible de la paroi. Ceci est peu esthétique et les vis sont accessibles aux passagers.

Il est également connu de fixer un spot lumineux sur une paroi d'un véhicule en collant, sur la face non-visible de cette paroi, une platine de montage et en immobilisant le spot sur cette platine au moyen d'écrous serrés sur des tiges filetées de la platine en emprisonnant des oreilles de ce spot. Le montage du spot sur la platine est long et nécessite le recours à de l'outillage spécifique.

C'est à ces inconvénients qu'entend plus particulièrement remédier l'invention, en proposant une nouvelle platine de montage compatible avec un montage d'une source lumineuse sans outils, de façon rapide et intuitive pour l'opérateur.

À cet effet, l'invention concerne une platine de montage d'une source lumineuse, sur une plaque appartenant à une paroi d'un véhicule, notamment ferroviaire, cette plaque étant équipée d'un orifice de passage d'un faisceau lumineux issu de la source lumineuse, la platine étant équipée d'une ouverture centrale, destinée à être alignée sur l'orifice de passage de la plaque, et d'organes de retenue de la source lumineuse, caractérisée en ce que la platine est constituée d'une pièce monobloc et en ce que les organes de retenue fonctionnent par encliquetage et comprennent au moins une patte élastiquement déformable d'accrochage de la source lumineuse et au moins une butée de blocage de la source lumineuse sur la platine.

Grâce à l'invention, les organes de retenue qui fonctionnent par encliquetage assurent une immobilisation rapide de la source lumineuse sur la platine, sans nécessité pour l'opérateur d'utiliser des outils spécifiques. L'opérateur peut mettre en place la source lumineuse sur la platine de façon intuitive, y compris lorsqu'il n'a pas un accès visuel à la platine et à la face non-visible de la paroi du véhicule. De par sa structure, la platine intègre en une seule pièce plusieurs fonctions des platines connues. Elle est plus légère et d'un prix de revient moindre.

Selon des aspects avantageux mais non-obligatoires de l'invention, une telle platine peut incorporer une ou plusieurs des caractéristiques suivantes, prises selon toute combinaison techniquement admissible :
- La pièce monobloc est en forme de plaque globalement plane, avec une face de base destinée à être tournée vers la plaque appartenant à la paroi du véhicule et une face de réception de la source lumineuse opposée à la face de base, chaque patte élastiquement déformable est ménagée dans l'épaisseur de la plaque et présente un relief d'accrochage de la source lumineuse et chaque butée est en saillie par rapport à la face de réception et définit un volume de réception d'une partie de la source lumineuse.
- Chaque patte est élastiquement déformable pour, d'une part, que son relief laisse passer la partie de la source lumineuse dans un premier sens, lors de l'encliquetage, et, d'autre part, son relief laisse passer la même partie du spot dans un deuxième sens opposé au premier sens, lors du démontage, sous l'effet d'un effort perpendiculaire à la platine de montage.
- La face de base définit un volume de réception d'un adhésif pour la fixation de la platine à la plaque appartenant à la paroi du véhicule.
- La platine est équipée d'au moins un orifice d'injection d'adhésif dans le volume et/ou au moins un orifice d'évacuation d'un excès d'adhésif hors du volume.
- Avant montage de la platine sur la plaque, l'ouverture centrale de la platine est équipée d'un gabarit de positionnement destiné à aligner l'ouverture centrale de la platine avec l'orifice de passage de la plaque.
- Avant montage de la platine sur la plaque, le gabarit de positionnement est relié au reste de la platine par au moins un pontet sécable.
- La platine est moulée par injection de matière plastique.
- La platine est équipée d'au moins un accroche-câble intégré, de préférence de deux accroche-câbles disposés à deux coins opposés de la platine.

L'invention concerne également un véhicule, notamment ferroviaire, de transport de passagers, comprenant une paroi délimitant un compartiment passager et équipée d'une source lumineuse maintenue en position sur une plaque par une platine de montage, caractérisé en ce que la platine de montage est telle que mentionné ci-dessus.

Ce véhicule induit les mêmes avantages que la platine de l'invention.

L'invention sera mieux comprise et d'autres avantages de celle-ci apparaîtront plus clairement à la lumière de la description qui va suivre, d'un mode de réalisation d'une platine de montage et d'un véhicule conformes à l'invention, donnée à titre d'exemple et faite en référence aux dessins annexés dans lesquels :
[Fig 1] La figure 1 est une coupe longitudinale d'un véhicule de transport de passagers conforme à l'invention, comprenant une platine de montage conforme à l'invention ; un détail A y est représenté à plus grande échelle ;
[Fig 2] La figure 2 est une vue de l'intérieur du véhicule, en direction du plafond, sur lequel les emplacements de deux spots à LED sont visibles ;
[Fig 3] La figure 3 est une vue en perspective éclatée de la platine de montage et de la paroi sur laquelle elle doit être montée ;
[Fig 4] La figure 4 est une vue en perspective de la platine de montage, vue selon un autre angle ;
[Fig 5] La figure 5 est une vue en perspective de la paroi, de la platine de montage et du spot à LED, lors d'une première étape de montage du spot à LED sur la platine ;
[Fig 6] La figure 6 est une vue en perspective des mêmes éléments, lors d'une deuxième étape de montage ; et
[Fig 7] La figure 7 est une vue en perspective des mêmes éléments, au terme du montage.

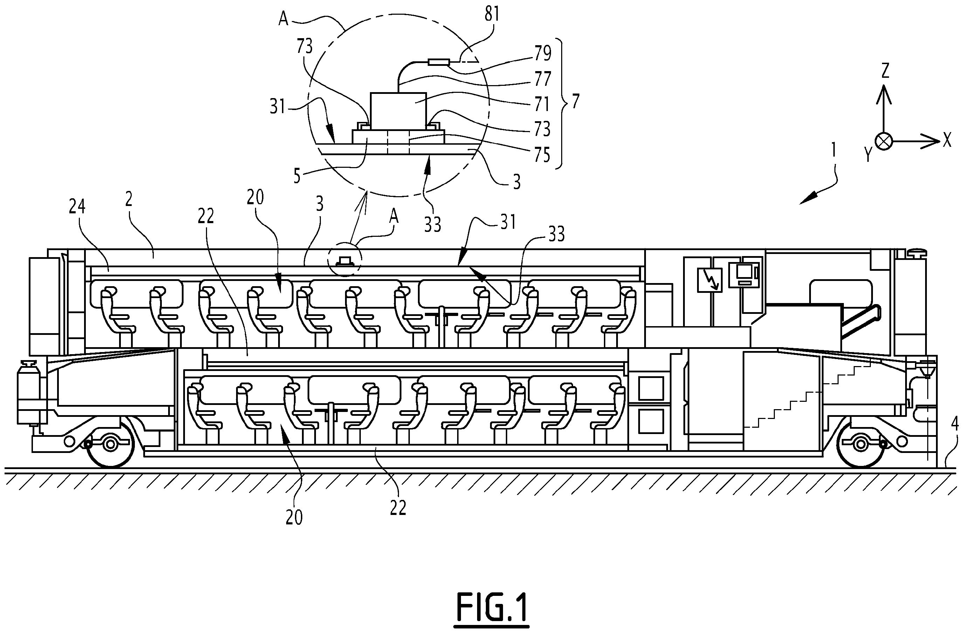

Un véhicule 1 est représenté sur la figure 1. Le véhicule 1 est un véhicule de transport de passagers, qui comprend une caisse 2 délimitant un compartiment 20 d'accueil de passagers. Dans l'exemple illustré, le véhicule 1 est un véhicule ferroviaire, destiné à circuler sur une voie ferrée 4. Plus particulièrement, le véhicule 1 est ici un train, qui comprend deux compartiments 20 superposés séparés par un plancher 22 intermédiaire. En variante non représentée, le train 1 peut être composé de plusieurs voitures, avec chacune une caisse 2. En variante non représentée, le véhicule 1 peut être un tramway, ou bien un véhicule routier, tel qu'un autocar, un véhicule de transport aérien, tel qu'un avion, voire encore un véhicule de transport maritime, tel qu'un paquebot.

La caisse 2 du véhicule 1 est ici représentée posée sur les rails de la voie ferrée 4 et s'étend suivant une direction parallèle à un axe longitudinal de la caisse définissant un axe X. Par commodité, on définit aussi un axe Z comme étant un axe vertical, ainsi qu'un axe Y orienté de sorte que les axes X, Y et Z forment un repère orthonormé. L'axe Y définit une direction transversale de la caisse 2.

Dans la suite de la description, les références spatiales telles que haut, bas, horizontal, vertical, droite, gauche, etc., sont faites en référence à l'orientation du véhicule 1 sur les dessins, et ne préjugent pas d'un quelconque sens de fonctionnement des éléments décrits dans la réalité.

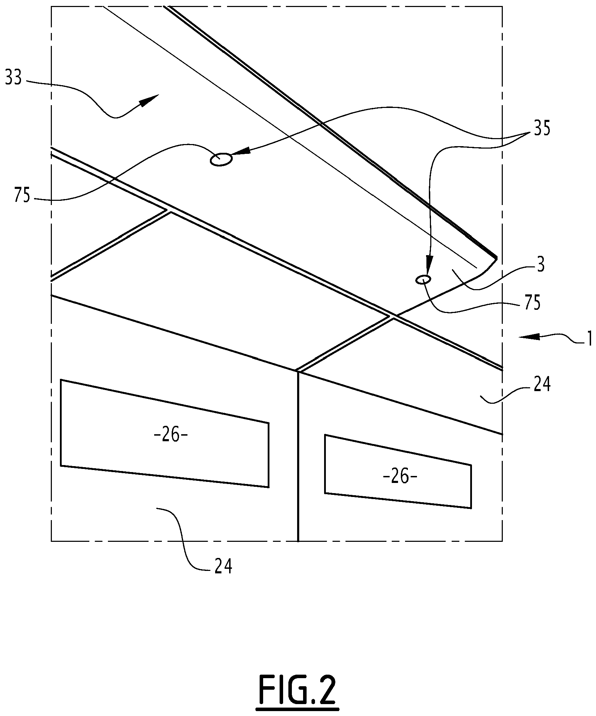

Chaque compartiment 20 est délimité par un plancher 22 et plusieurs parois 24 qui constituent soit un côté soit un plafond pour ce compartiment. Comme visible à la figure 2, des fenêtres 26 sont ménagées dans les parois de côté. Le plafond 24 du compartiment supérieur est formé de plusieurs plaques dont l'une au moins, référencée 3, est équipée de deux spots 7 à diodes électroluminescentes, dites DEL ou LED (de l'anglais light-emitting diode), qui constituent chacun une source lumineuse permettant d'éclairer le compartiment 20.

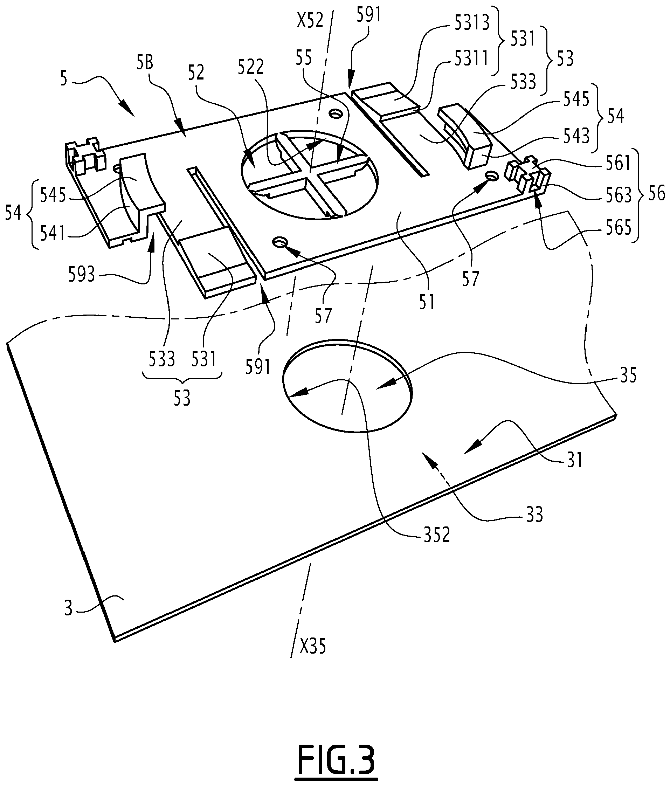

On note 31 la face non-visible de la plaque 3 depuis l'intérieur du compartiment 20, cette face étant apparente sur la figure 3, et 33 sa face visible depuis ce compartiment, cette face 33 étant apparente sur la figure 2.

À la figure 1, un seul spot 7 est représenté, pour la simplicité du dessin. En pratique, plusieurs spots sont répartis dans plusieurs plaque 3 des parois 24.

La plaque 3 est percée d'un orifice 35, à section circulaire centrée sur un axe X35, qui permet le passage du faisceau lumineux issu du spot 7. On note 352 le bord de l'orifice 35.

Une platine 5 est prévue pour le montage du spot 7 sur la plaque 3, plus particulièrement sur sa face 31.

Cette platine 5 est monobloc, en forme de plaque globalement plane, et réalisée par injection de matière plastique, notamment de polycarbonate ou de polyamide renforcé. La platine 5 définit une face de base 5A, qui est disposée en regard de la face 31 de la plaque 3 lorsque la platine est immobilisée sur cette plaque, et une face 5B de réception du spot 7, opposée à la face 5A. L'épaisseur de la platine 5 est définie entre ses faces 5A et 5B

La platine 5 comprend un corps principal 51 dans lequel est ménagée une ouverture centrale 52, à section circulaire centrée sur un axe X52. On note 522 le bord de l'ouverture 52.

La platine 5 comprend également deux pattes d'accrochage élastiquement déformables 53, disposées sur deux côtés opposés du corps principal 51. Chaque patte d'accrochage 53 est ménagée dans l'épaisseur de la platine 5 et est séparée du corps principal 51 par une fente 591. Chaque patte d'accrochage 53 comprend un relief d'accrochage 531 et une bande plate 533. La bande plate 533 est reliée au corps principal 51 par une première extrémité et le relief 531 est ménagé à l'extrémité libre de la bande 533, qui est opposée à sa première extrémité. La géométrie de la bande plate 533 et la présence de la fente 591 confèrent à la patte 53 une souplesse supérieure à celle du corps principal 51. Le relief 531 comporte une paroi de blocage 5311 perpendiculaire à la bande plate 533 et une rampe 5313 qui converge vers la face 5A en s'éloignant de la paroi de blocage 5311.

On note L51 la longueur du corps principal 51, mesuré entre les deux fentes 591.

La platine 5 comprend également deux butées de blocage 54, disposées de part et d'autre des pattes d'accrochage 53, en saillie par rapport à la face 5B. Chaque butée de blocage 54 s'étend le long d'une fente 593 qui longe la patte 53 adjacente et comprend deux parois 541 et 543 perpendiculaires à la face 5B. Ici, la paroi 541 est en forme d'arc de cercle centré sur l'axe X52 et longe la fente 593. Ici, la paroi 543 est disposée sur la surface 5B au niveau du fond de la fente 593. Ainsi, la paroi 543 est globalement parallèle à la longueur L51. Chaque butée de blocage 54 comprend également une paroi d'arrêt 545, parallèle à la face 5B et qui prolonge les bords des surfaces 541 et 543 opposés à la face 5B. Les parois 541, 543 et 545 définissent ensemble un volume interne V54 de la butée 54, ce volume étant aligné avec la fente 593 selon un axe perpendiculaire à la longueur L51.

La platine 5 comprend également un gabarit de positionnement 55 en forme de croix constituée de quatre branches de mêmes longueurs. L'axe X52 passe par le centre de ce gabarit, là où les branches se rencontrent. Ces quatre branches sont initialement reliées au bord 522 par des pontets sécables 551. Les extrémités des quatre branches opposées au centre du gabarit 55 présentent chacune un décroché 553 destiné à venir en appui, d'une part, contre le bord 352 de l'orifice 35 et, d'autre part, contre la face non-visible 31 de la plaque 3. Ce gabarit 55 permet de positionner la platine 5 sur la plaque 3 en alignant les axes X52 et X35.

La platine 5 comprend également deux accroche-câbles 56 disposés sur deux coins opposés de la platine 5 et qui comprennent chacun une plaquette 561 supportée par quatre pieds 563, les espaces entre cette plaquette 561 et ces pieds 563 définissant des passages 565 pour des colliers de serrage de câbles, non-représentés.

La platine 5 comprend également des orifices 57 qui traversent la platine 5 de part en part entre les faces 5A et 5B. Dans l'exemple, ces orifices sont au nombre de 4. Le nombre et la répartition des orifices 57 sur la platine 5 peuvent être différents.

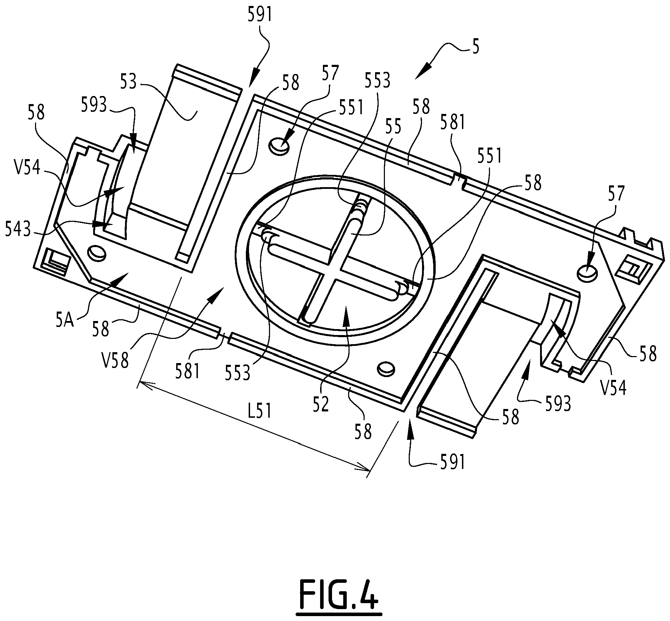

Comme visible à la figure 4, la platine 5 comprend également des bords 58 disposés sur le contour de la face 5A, sauf au niveau des pattes d'accrochage 53, et autour de l'ouverture 52, en saillie par rapport à cette face 5A, à l'opposé de la face 5B. Les bords 58 définissent entre eux et le long de la face 5A un volume V58 de réception de colle. Les orifices 57 débouchent dans le volume V58. Les bords 58 sont interrompus localement par des orifices d'évacuation 581 du surplus de colle. Dans l'exemple, ces orifices sont au nombre de 4 et répartis sur les bords 58. Le nombre et la répartition des orifices 581 sur les bords 58 peuvent être différents. Lorsque la platine 5 est installée sur la face 31 de la plaque 3, les bords 58 sont en contact avec cette face qui délimite alors le volume V58 avec les bords 58.

Le spot 7 comprend un corps principal 71 de forme parallélépipédique prolongé sur deux faces opposées par deux oreilles de fixation 73. Le spot 7 comprend également une lentille 75 destinée à diffuser la lumière émise par la ou les LED. Cette lentille est représentée de façon très schématique à la figure 1 et visible à travers l'orifice 35 à la figure 2. De préférence, en configuration montée du spot 7 sur la platine 5 et la plaque 3, la lentille 75 est engagée dans l'ouverture 52 et dans l'orifice 35, au point qu'elle affleure avec la face visible 33 de la plaque 3. De préférence également, les oreilles de fixation 73 sont coplanaires avec la face du corps principal 71 à partir de laquelle s'étend la lentille 75.

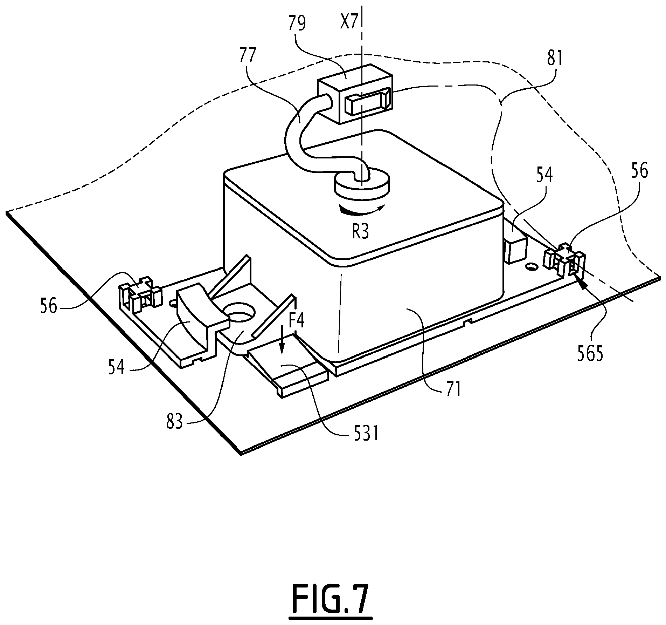

Le spot 7 comprend également un câble électrique 77 équipé d'un connecteur 79 pour raccordement à un câble d'alimentation 81 représenté uniquement aux figures 1 et 7 par un trait d'axe. On note X7 un axe du spot 7 confondu avec l'axe de la lentille 75. Dans cet exemple, l'axe X7 est un axe central du corps principal 71.

Le montage du spot 7 sur la plaque 3 est effectué au moyen de la platine 5 comme expliqué ci-après.

Tout d'abord, la platine 5 est immobilisée sur la face 31 de la plaque 3. Dans une première étape, la platine 5 est positionnée sur face 31 à l'aide du gabarit 55 dans une configuration où les deux axes X52 et X35 sont confondus et où les bords 58 sont en appui sur la face 31. Ceci est obtenu en amenant les décrochés 553 du gabarit 55 en appui contre le bord 352 et contre la face non-visible 31. Dans une deuxième étape, de la colle est injectée dans le volume V58 à travers les orifices 57. Le remplissage complet du volume V58 est repéré par la sortie d'une partie de la colle, en excès, par les orifices 581. Au terme de cette deuxième étape et après séchage de la colle, la platine 5 est solidarisée avec la plaque 3.

Dans une troisième étape, le gabarit 55 est détaché du reste de la platine 5 par rupture des pontets sécables 551. Au terme de cette troisième étape, l'ouverture centrale 52 de la platine 5 est en vis-à-vis de l'orifice 35, ces deux volumes étant prêts à recevoir la lentille 75 du spot 7.

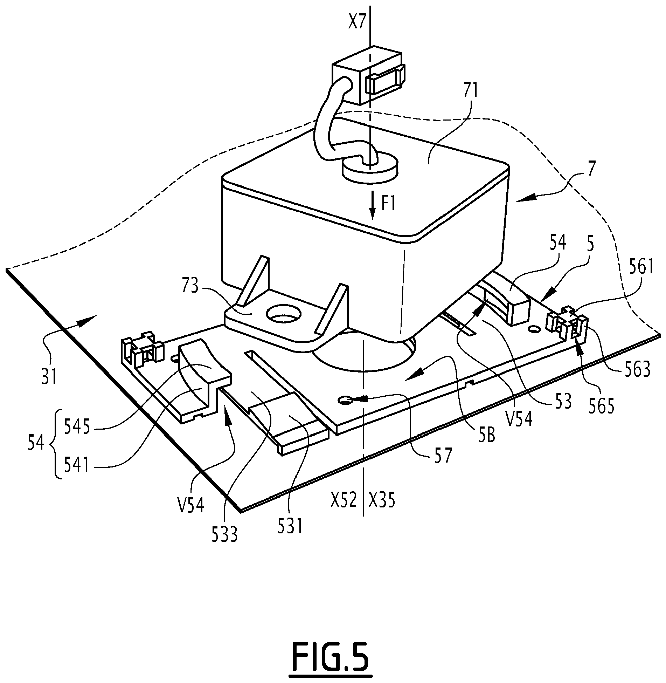

Dans une quatrième étape, le spot 7 est approché de la platine 5, en alignant l'axe X7 et l'axe X52, et en présentant la lentille 75 face à l'ouverture centrale 52 et à l'orifice 35. On décale alors angulairement autour de l'axe X52 les oreilles 73 par rapport aux butées 54. Le matériel est alors dans la configuration représentée sur la figure 5.

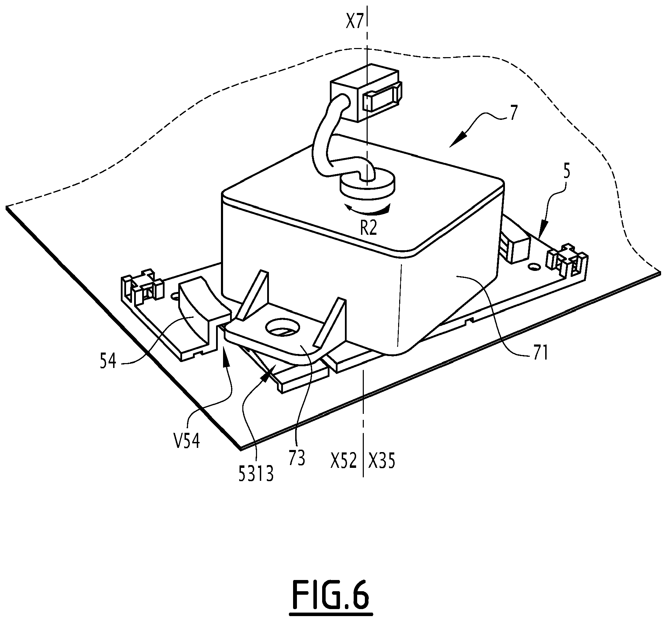

Dans une cinquième étape, le spot 7 est plaqué contre la face de réception 5B de la platine 5, par une translation axiale le long des axes X52 et X35 confondus, comme représenté par la flèche F1 à la figure 5. Le matériel est alors dans la configuration représentée sur la figure 6.

Dans une sixième étape, un mouvement de rotation autour de l'axe X7 est imprimé au spot 7, comme représenté par la flèche R2 à la figure 6. Ce mouvement de rotation permet d'engager les oreilles 73 dans les volumes V54. Cette rotation est rendue possible par la déformation élastique des pattes d'accrochage 53 et par la présence des rampes 5313 qui facilitent cette déformation. Le mouvement de rotation dans le sens de la flèche R2 est poursuivi jusqu'à obtenir un contact entre les oreilles 73 et les faces d'arrêt 545. Le matériel est alors dans la configuration représentée sur la figure 7.

Dans cette configuration, les reliefs 531 ont repris leur position initiale de la figure 5, du fait de l'élasticité des pattes 53, au point que les parois de blocage 5311 sont en vis-à-vis avec les oreilles 73. Le spot 7 est ainsi encliqueté sur la platine 5. Dans cette configuration, les reliefs 531 s'opposent à une rotation autour de l'axe X7, telle que représentée par la flèche R3 à la figure 7, en sens inverse de la rotation R2. Ainsi, le spot 7 est immobilisé sur la platine 5 par coopération de formes du corps principal 71 avec la face 5B et des oreilles 73 avec les pattes d'accrochage 53 et avec les butées de blocage 54. Plus précisément, les oreilles 73 sont prisonnières dans les volumes V54, où elles sont bloquées par les parois 541, qui s'opposent à une translation du spot 7 parallèle à la longueur L51, par les parois 543, qui s'opposent à une rotation du spot 7 dans le sens de la flèche R2, par les parois d'arrêt 545, qui s'opposent à une translation du spot 7 parallèlement à l'axe X52 en s'éloignant de la face 5B, et par les parois de blocage 5311, qui s'opposent à une rotation du spot 7 dans le sens de la flèche R3.

Dans l'exemple des figures, l'amplitude angulaire de la rotation dans le sens de la flèche R2 pour passer de la configuration de la figure 6 à la configuration de la figure 7, entre l'instant où les oreilles pénètrent dans les volumes V54 et l'instant où les oreilles sont encliquetées, est égale à environ 23°. En pratique, cette amplitude angulaire peut être choisie entre 10° et 45°.

Une fois le spot 7 immobilisé sur la platine 5, le câble d'alimentation 81 peut être connecté sur le connecteur 79 et maintenu par rapport à la platine 5 à l'aide d'un collier de serrage passant dans l'un des passages 565.

Lorsqu'il convient de démonter le spot LED, par exemple pour une opération de maintenance, l'opérateur exerce sur chaque relief 531 un effort parallèle à l'axe X7, c'est-à-dire perpendiculaire à la platine de montage 5, et dirigé vers la plaque 3, comme représenté par la flèche F4 à la figure 7. Cet effort permet d'effacer chaque relief 531 par rapport à l'oreille 73 adjacente, jusqu'à ce que sa paroi de blocage 5311 ne s'oppose plus à la rotation dans le sens de la flèche R3. À partir de cette étape, le spot peut être amené à la configuration de la figure 6, puis à celle de la figure 5.

Une fois le spot LED démonté, le câble d'alimentation 81 peut être déconnecté du connecteur 79 puis maintenu par rapport à la platine 5 à l'aide d'un collier de serrage passant par l'un des passages 565, ce qui évite d'avoir à rechercher ce câble pour un branchement ultérieur.

Il ressort des explications qu'il précède que la platine 5 est d'un prix de revient faible et que sa mise en oeuvre est à la fois simple et rapide, permettant de diminuer les coûts d'installation et de maintenance des dispositifs d'éclairage de véhicules, notamment ferroviaire.

Le nombre de pattes d'accrochage 53 et de butées 54 n'est pas forcément égal à deux. En particulier, le nombre de pattes d'accrochage 53 peut être différent du nombre de butées 54. Ce nombre, supérieur ou égal à un, est en pratique adapté au nombre d'oreilles 73 de la source lumineuse 7.

En variante, la source lumineuse utilisée avec la platine 5 peut être différente d'un spot à LED. Il peut s'agir d'un spot avec ampoule halogène ou d'une autre source lumineuse, de type fluocompacte, Oled ou autre.

Selon une autre variante, la plaque 3 peut faire partie d'une cloison globalement verticale qui délimite un côté du compartiment 20, ou tout autre type de cloison du véhicule.

Selon une autre variante, la platine 5 peut être fabriquée en une autre matière que de la matière plastique, par exemple en métal embouti, par exemple en alliage léger moulé, ou en matériau composite.

La colle utilisée pour remplir le volume V58 et fixer la platine 5 sur la plaque 3 est, par exemple, de type mastic colle adapté aux matériaux de la plaque 3 et de la platine 5. En variante, un autre type d'adhésif peut être utilisé, notamment un adhésif double face en rouleau ou une soudure si les matériaux de la plaque 3 et de la platine 5 le permettent.

Selon une autre variante, le nombre d'accroche-câbles 56 peut être différent de deux. Selon une autre variante, la platine 5 est dépourvue d'accroche-câbles 56.

Le mode de réalisation et les variantes présentées ci-dessus peuvent être combinés pour générer de nouveaux modes de réalisation de l'invention.

## Revendications

1. Platine de montage (5) d'une source lumineuse (7), sur une plaque (3) appartenant à une paroi (24) d'un véhicule (1), notamment ferroviaire, cette plaque étant équipée d'un orifice (35) de passage d'un faisceau lumineux issu de la source lumineuse, la platine étant équipée d'une ouverture centrale (52), destinée à être alignée sur l'orifice de passage de la plaque, et d'organes de retenue de la source lumineuse, **caractérisée en ce que** la platine (5) est constituée d'une pièce monobloc et **en ce que** les organes de retenue fonctionnent par encliquetage (F1, R2) et comprennent au moins une patte (53) élastiquement déformable d'accrochage de la source lumineuse (7) et au moins une butée (54) de blocage de la source lumineuse sur la platine.

2. Platine de montage (5) selon la revendication 1, **caractérisée en ce que** la pièce monobloc est en forme de plaque globalement plane, avec une face de base (5A) destinée à être tournée vers la plaque (3) appartenant à la paroi (24) du véhicule (1) et une face (5B) de réception de la source lumineuse (7) opposée à la face de base, **en ce que** chaque patte (53) élastiquement déformable est ménagée dans l'épaisseur de la plaque et présente un relief (531) d'accrochage de la source lumineuse et **en ce que** chaque butée (54) est en saillie par rapport à la face de réception et définit un volume (V54) de réception d'une partie (73) de la source lumineuse.

3. Platine de montage (5) selon la revendication 2, **caractérisée en ce que** chaque patte (53) est élastiquement déformable pour, d'une part, que son relief (531) laisse passer la partie (73) de la source lumineuse (7) dans un premier sens (R2), lors de l'encliquetage, et, d'autre part, que son relief laisse passer la même partie du spot dans un deuxième sens (R3) opposé au premier sens, lors du démontage, sous l'effet d'un effort (F4) perpendiculaire à la platine de montage.

4. Platine de montage (5) selon l'une quelconque des revendications 2 ou 3, **caractérisée en ce que** la face de base (5A) définit un volume (V58) de réception d'un adhésif pour la fixation de la platine à la plaque (3) appartenant à la paroi (24) du véhicule (1).

5. Platine de montage (5) selon la revendication 4, **caractérisée en ce que** la platine est équipée d'au moins un orifice (57) d'injection d'adhésif dans le volume (V58) et/ou d'au moins un orifice (581) d'évacuation d'un excès d'adhésif hors du volume.

6. Platine de montage (5) selon l'une quelconque des revendications précédentes, **caractérisée en ce que**, avant montage de la platine sur la plaque (3), l'ouverture centrale (52) de la platine est équipée d'un gabarit de positionnement (55) destiné à aligner l'ouverture centrale de la platine avec l'orifice de passage (35) de la plaque.

7. Platine de montage (5) selon la revendication 6, **caractérisée en ce que**, avant montage de la platine sur la plaque (3), le gabarit de positionnement (55) est relié au reste de la platine par au moins un pontet sécable (551).

8. Platine de montage (5) selon l'une quelconque des revendications précédentes, **caractérisée en ce que** la platine est moulée par injection de matière plastique.

9. Platine de montage (5) selon l'une quelconque des revendications précédentes, **caractérisée en ce que** la platine est équipée d'au moins un accroche-câble (56) intégré, de préférence de deux accroche-câbles disposés à deux coins opposés de la platine.

10. Véhicule (1), notamment ferroviaire, de transport de passagers, comprenant une paroi (24) délimitant un compartiment passager (20) et équipée d'une source lumineuse (7) maintenue en position sur une plaque (3) par une platine de montage (5), **caractérisé en ce que** la platine de montage est selon l'une des revendications précédentes.

## Patentansprüche

1. Platte für die Montage (5) einer Lichtquelle (7) auf einer Tafel (3), die zu einer Wand (24) eines Fahrzeugs (1), insbesondere eines Schienenfahrzeugs, gehört, wobei diese Tafel mit einer Öffnung (35) für den Durchgang eines von der Lichtquelle ausgehenden Lichtstrahls ausgestattet ist, wobei die Platte mit einer zentralen Öffnung (52) ausgestattet ist, die dazu bestimmt ist, auf die Durchgangsöffnung der Tafel ausgerichtet zu sein, und mit Halteorganen der Lichtquelle, **dadurch gekennzeichnet, dass** die Platte (5) aus einem Stück besteht, und dass die Halteorgane durch Rasten (F1, R2) funktionieren und mindestens eine elastisch verformbare Lasche (53) zum Einhängen der Lichtquelle (7) und mindestens einen Anschlag (54) zum Arretieren der Lichtquelle auf der Platte umfassen.

2. Montageplatte (5) nach Anspruch 1, **dadurch gekennzeichnet, dass** das einstückige Teil die Form einer insgesamt ebenen Tafel hat mit einer Grundfläche (5A), die dazu bestimmt ist, der zur Wand (24) des Fahrzeugs (1) gehörenden Tafel (3) zugewandt zu sein, und eine der Grundfläche gegenüberliegende Fläche (5B) zur Aufnahme der Lichtquelle (7), dass jede elastisch verformbare Lasche (53) in der Dicke der Tafel ausgespart ist und ein Relief (531) zum Einhaken der Lichtquelle aufweist, und dass jeder Anschlage (54) in Bezug auf die Aufnahmefläche hervorspringt und ein Volumen (V54) zur Aufnahme eines Teils (73) der Lichtquelle definiert.

3. Montageplatte (5) nach Anspruch 2, **dadurch gekennzeichnet, dass** jede Lasche (53) elastisch verformbar ist, damit einerseits ihr Relief (531) beim Einrasten den Teil (73) der Lichtquelle (7) in einer ersten Richtung (R2) hindurchdurchlässt und andererseits ihr Relief denselben Teil des Spots in einer zweiten Richtung (R3) entgegengesetzt zur ersten Richtung bei der Demontage unter der Wirkung einer Kraft (F4) senkrecht zur Montageplatte hindurchlässt.

4. Montageplatte (5) nach einem der Ansprüche 2 oder 3, **dadurch gekennzeichnet, dass** die Grundfläche (5A) ein Volumen (V58) zur Aufnahme eines Klebers für die Befestigung der Platte an der zur Wand (24) des Fahrzeugs (1) gehörenden Tafel (3) definiert.

5. Montageplatte (5) nach Anspruch 4, **dadurch gekennzeichnet, dass** die Platte mit mindestens einer Öffnung (57) zum Einspritzen von Kleber in das Volumen (V58) und/oder mit mindestens einer Öffnung (581) zum Entfernen eines Kleberüberschusses aus dem Volumen ausgestattet ist.

6. Montageplatte (5) nach einem der vorhergehenden Ansprüche, **dadurch gekennzeichnet, dass** vor der Montage der Platte auf der Tafel (3) die zentrale Öffnung (52) der Platte mit einer Positionierungsschablone (55) ausgestattet wird, die dazu bestimmt ist, die zentrale Öffnung der Platte mit der Durchgangsöffnung (35) der Tafel auszurichten.

7. Montageplatte (5) nach Anspruch 6, **dadurch gekennzeichnet, dass** vor der Montage der Platte auf der Tafel (3) die Positionierungsschablone (55) durch mindestens eine zerbrechbare Brücke (551) mit dem Rest der Platte verbunden ist.

8. Montageplatte (5) nach einem der vorhergehenden Ansprüche, **dadurch gekennzeichnet, dass** die Platte durch Spritzen von Kunststoff geformt wird.

9. Montageplatte (5) nach einem der vorhergehenden Ansprüche, **dadurch gekennzeichnet, dass** die Platte mit mindestens einem integrierten Kabelhaken (56), vorzugsweise mit zwei Kabelhaken, ausgestattet ist, die an zwei gegenüberliegenden Ecken der Platte angeordnet sind.

10. Fahrzeug (1), insbesondere Schienenfahrzeug, zur Beförderung von Passagieren, mit einer Wand (24), die ein Passagierabteil (20) begrenzt und mit einer Lichtquelle (7) ausgestattet ist, die von einer Montageplatte (5) auf einer Tafel (3) in Position gehalten wird, **dadurch gekennzeichnet, dass** die Montageplatte nach einem der vorhergehenden Ansprüche ist.

## Claims

1. A mounting plate (5) for a light source (7) on a plate (3) belonging to a wall (24) of a vehicle (1), in particular a railway vehicle, this plate being equipped with an orifice (35) for passage of a light beam from the light source, the plate being equipped with a central opening (52), intended to be aligned on the orifice through which the plate passes, and members for retaining the light source, **characterised in that** the plate (5) consists of a one-piece part and **in that** the light source is mounted on the plate part and **in that** the retaining members operate by latching (F1, R2) and comprise at least one elastically deformable tab (53) for hooking the light source (7) and at least one stop (54) for locking the light source on the plate.

2. A mounting plate (5) according to Claim 1, **characterised in that** the one-piece part is in the form of a generally flat plate, with a base face (5A) intended to be turned towards the plate (3) belonging to the wall (24) of the vehicle (1) and a face (5B) for receiving the light source (7) opposite it to be turned towards the plate (3) belonging to the wall (24) of the vehicle (1) and a face (5B) for receiving the light source (7) opposite the base face, **in that** each the base face, **in that** each elastically deformable lug (53) is formed in the thickness of the plate and has a relief (531) for catching the light source, and **in that** each stop (54) projects from the receiving face and defines a volume (V54) for receiving part (73) of the light source.

3. A mounting plate (5) according to Claim 2, **characterized in that** each lug (53) is elastically deformable so that, on the one hand, its relief (531) allows the part (73) of the light source (7) to pass in a first direction (R2) when it is clipped in and, on the other hand, its relief allows the same part of the spotlight to pass in a second direction (R3) opposite to the first direction when it is removed under the effect of a force (F4) perpendicular to the mounting plate.

4. A mounting plate (5) according to any one of claims 2 or 3, **characterised in that** the base face (5A) defines a volume (V58) for receiving an adhesive for fixing the plate to the plate (3) belonging to the wall (24) of the vehicle (1).

5. A mounting plate (5) according to Claim 4, **characterised in that** the plate is equipped with at least one orifice (57) for injecting adhesive into the volume (V58) and/or at least one orifice (581) for removing excess adhesive from the volume.

6. A mounting plate (5) according to any one of the preceding claims, **characterised in that**, before mounting the plate on the plate (3), the central opening (52) of the plate is equipped with a positioning template (55) intended to align the central opening of the plate with the passage orifice (35) of the plate.

7. A mounting plate (5) as claimed in claim 6, **characterised in that**, before the plate is mounted on the plate (3), the positioning template (55) is connected to the rest of the plate by at least one breakaway bridge (551).

8. A mounting plate (5) according to any one of the preceding claims, **characterised in that** the plate is injection moulded from plastic.

9. A mounting plate (5) according to any one of the preceding claims, **characterised in that** the plate is equipped with at least one integrated cable hook (56), preferably two cable hooks arranged at two opposite corners of the plate.

10. Vehicle (1), in particular a rail vehicle, for transporting passengers, comprising a wall (24) delimiting a passenger compartment (20) and equipped with a light source (7) held in position on a plate (3) by a mounting plate (5), **characterised in that** the mounting plate is according to one of the preceding claims.
